# EUROPÄISCHE PATENTSCHRIFT

(11) **EP 1 929 610 B1**
(45) Veröffentlichungstag und Bekanntmachung des Hinweises auf die Patenterteilung: **22.03.2017**
(21) Anmeldenummer: 06791608.0
(22) Anmeldetag: 22.08.2006
(51) Int. Cl.: H02K 5/24, F04D 29/66, F04D 29/42, H02K 5/22, H02K 5/18, H02K 9/14

(54) **LÜFTERHAUBE UND ANTRIEB**
FAN COWLING AND DRIVE
CAPOT DE VENTILATEUR ET ENTRAINEMENT

(30) Priorität: 22.09.2005 DE 102005045487
(43) Veröffentlichungstag der Anmeldung: 11.06.2008
(73) Patentinhaber: SEW-EURODRIVE GmbH & Co. KG, 76646 Bruchsal (DE)
(72) Erfinder: OSIPOV, Petr, 76646 Bruchsal (DE); TRÖNDLE, Karl-Heinz, 76694 Forst (DE); RIFFEL, Michael, 76694 Forst (DE)
(74) Vertreter: Tüngler, Eberhard
(86) Internationale Anmeldenummer: PCT/EP2006/008232
(87) Internationale Veröffentlichungsnummer: WO 2007/033740

(56) Entgegenhaltungen:
- EP-A- 0 453 616
- JP-A- 63 234 854
- SU-A1- 1 226 575

## Beschreibung

Die Erfindung betrifft eine Lüfterhaube und einen Antrieb.

Industrielle Antriebe umfassen meist Getriebe, die von Elektromotoren angetrieben werden, wobei die Elektromotoren von Umrichtern versorgt werden. Pulsweitenmoduliertes Betreiben der Umrichter sowie weitere elektrische Wechselgrößen führen zu zeitlich veränderlichen Kräften auf Teile des Antriebs. Beispielsweise werden Schwingungen angeregt durch von elektromagnetisch beeinflussten Teilen. Diese Schwingungen bewirken die Abstrahlung von Schall als Emission in die Umwelt. Insbesondere werden Schwingungen auch vom Motorgehäuse über Schraubverbindungen an die am Motorgehäuse angeschraubte Lüfterhaube des Motors übertragen und dort als Schall abgestrahlt.

Aus der EP 0 453 616 A ist ein Elektromotor mit einer Lüfterhaube bekannt.

Aus der JP 63 234854 A ist bekannt, bei einem Antriebsgehäuse axiale Schlitze vorzusehen, die um Befestigungsschrauben herum vorgesehen sind und somit das Einleiten von Schwingungen verhindern sollen.

Aus der SU 1 226 575 A1 ist eine Befestigungsschraube bekannt.

Der Erfindung liegt daher die Aufgabe zugrunde, den Umweltschutz zu verbessern weiterzubilden, wobei insbesondere die Emissionen bei industriellen Antrieben verringert werden sollen.

Erfindungsgemäß wird die Aufgabe bei der Lüfterhaube nach den in Anspruch 1 und bei dem Antrieb nach den in Anspruch 9 angegebenen Merkmalen gelöst.

Wichtige Merkmale der Erfindung bei der Lüfterhaube für einen Elektromotor sind, dass Schlitze zur Reduzierung der Schallemission am Umfang der Lüfterhaube angeordnet sind, wobei jeweils ein einziger Schlitz am Umfang der Lüfterhaube in Umfangsrichtung zwischen jeweils zwei Befestigungsschrauben angeordnet ist, welche die Lüfterhaube mit einem Motorgehäuse verbinden, wobei die Befestigungsschrauben an Ausnehmungen der Lüfterhaube vorgesehen sind. Von Vorteil ist dabei, dass mit sehr kostengünstigen Mitteln die Schallemissionen reduzierbar sind und somit der Umweltschutz verbessert. Außerdem ist die Masse der Anordnung, also des Antriebs, verkleinert und somit das Gewicht reduziert. Außerdem ist Material einsparbar und somit der Umweltschutz verbesserbar.

Bei einer vorteilhaften Ausgestaltung sind die Schlitze in axialer Richtung orientiert. Von Vorteil ist dabei, dass die radialen Schwingungsamplituden reduzierbar sind. Denn diese tragen wesentlich zur Emission bei.

Bei einer vorteilhaften Ausgestaltung umfasst die Lüfterhaube in einem ersten axialen Abschnitt einen zylindrischen Bereich, in einem zweiten axialen Bereich einen abgeschrägten Bereich und in einem dritten axialen Bereich ein Lüfterhaubengitter. Von Vorteil ist dabei, dass weitere schallreduzierende Schlitze vorsehbar sind. Diese sind außerdem kostengünstig herstellbar.

Bei einer vorteilhaften Ausgestaltung erstrecken die Schlitze sich in axialer Richtung nur teilweise über die Breite des zylindrischen Bereiches. Von Vorteil ist dabei, dass die Stabilität der Lüfterhaube nur geringfügig beeinträchtigt ist.

Bei einer vorteilhaften Ausgestaltung sind Schlitze in Bereichen der Lüfterhaube mit geringer Steifigkeit oder Festigkeit angeordnet sind. Von Vorteil ist dabei, dass genau in diesen Bereichen ohne die Schlitze große Amplituden auftreten würden. Dadurch, dass die Schlitze nur klein, also kurz, ausgeführt werden, ist dann die Festigkeit nur unwesentlich verringert, die Schwingungsfähigkeit jedoch verringert, insbesondere wird durch die Schlitze das Ausbilden und Ausbreiten umlaufender und pulsierender Wellen verhindert.

Bei einer vorteilhaften Ausgestaltung sind Schlitze im zweiten oder dritten axialen Bereich der Lüfterhaube angeordnet. Von Vorteil ist dabei, dass entsprechende Schwingungen unterdrückbar oder zumindest verringerbar sind.

Bei einer vorteilhaften Ausgestaltung sind Anordnung und Ausformung der Schlitze derart ausgeführt, dass die Schallemissionen reduziert sind. Von Vorteil ist dabei, dass die Ausformungsart keine Kosten erhöht und somit eine kostengünstige Methode zur Emissionsminderung vorgesehen wird.

Bei einer vorteilhaften Ausgestaltung sind die Schlitze am Umfang der Lüfterhaube zwischen Befestigungsschrauben angeordnet. Von Vorteil ist dabei, dass dort auftretende große Schwingungsamplituden umlaufender Wellen und auch stehender Wellen verringerbar sind.

Bei einer vorteilhaften Ausgestaltung führt die Lüfterhaube gehäusebildende Funktion für einen Lüfter und/oder einen mit der Motorwelle verbundenen Winkelsensor aus. Von Vorteil ist dabei, dass die Lüfterhaube ein Gehäuseteil darstellt, das in kostengünstiger Weise wenig Schall-Emission abstrahlt.

Wichtige Merkmale der Erfindung bei dem Antrieb sind, dass er zumindest einen Elektromotor und ein Getriebe umfasst, wobei Schlitze an zumindest einem Gehäuseteil zur Reduzierung der Schallemission angeordnet sind, wobei jeweils ein einziger Schlitz am Umfang des Gehäuseteils in Umfangsrichtung zwischen jeweils zwei Befestigungsschrauben angeordnet ist, welche das Gehäuseteil mit einem Motorgehäuse verbinden, wobei die Befestigungsschrauben an Ausnehmungen des Gehäuseteils vorgesehen sind. Beispielsweise ist das Gehäuseteil eine Kühlrippe, ein Anschlusskasten oder eine Lüfterhaube ist. Besonders flache oder dünne flächige Teile, wie Rippen und Hauben tragen ohne die Schlitze erhebliche Anteile an der Schallemission bei.

Von Vorteil ist dabei, dass der Antrieb durch einfache und kostengünstige Maßnahmen, wie Schlitzen von Teilen, schallvermindernd ausführbar ist.

Weitere Vorteile ergeben sich aus den Unteransprüchen.

Die Erfindung wird nun anhand von Abbildungen näher erläutert:

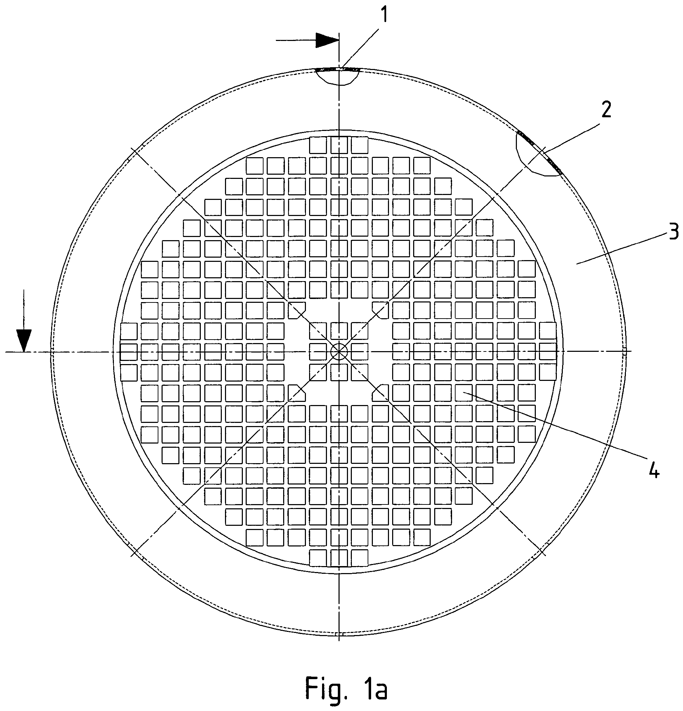

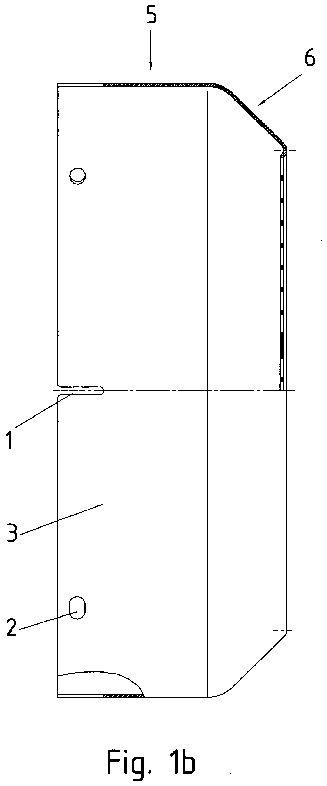

In der Figur 1a ist eine erfindungsgemäße Lüfterhaube für den Antrieb gezeigt in axialer Draufsicht und in Figur 1b in Seitenansicht gezeichnet.

Die Lüfterhaube ist mittels Befestigungsschrauben, die an den Ausnehmungen 2 vorgesehen sind, mit dem Motorgehäuse des Antriebs verbunden. Es sind vier Ausnehmungen 2 vorgesehen.

Die Lüfterhaube weist ein Lüfterhaubengitter auf, das zum Durchleiten des Kühlluftstroms des Lüfters vorgesehen ist, welcher von der Lüfterhaube zum Schutz und zur Beeinflussung des Kühlluftstromes vorgesehen ist. Dabei ist der Lüfter an einen axialen Endbereich des Motors montiert. Der zylindrische Bereich 5 ist axial orientiert angeordnet. Der abgeschrägte Bereich 6 schließt sich an diesen Bereich 5 an und endet im Bereich des Lüfterhaubengitters 4.

Am Umfang der Lüfterhaube 3 sind vier Schlitze 1 vorgesehen, die in axialer Richtung orientiert sind.

Bei weiteren erfindungsgemäßen Ausführungsbeispielen sind acht oder eine andere Anzahl von Ausnehmungen 2 vorgesehen. Auch die Anzahl der Schlitze und die Ausformung, insbesondere Länge, der Schlitze sind anpassbar und zur Verringerung der Schallemissionen entsprechend anpassbar.

Bei weiteren erfindungsgemäßen Ausführungsbeispielen sind auch andere Orientierungen der Schlitze 1 vorteilhaft, wie beispielsweise radiale oder schräge Anordnung der Schlitze. Die Schlitze können also auch im abgeschrägten Bereich oder sogar im Lüfterhaubengitter vorgesehen werden. Besonders vorteilhaft ist es, die Schlitze in Bereichen anzubringen, wo ohne die Schlitze eine große oder sogar eine lokal maximale Schwingungsamplitude auftritt.

Als besonders vorteilhafter Ort für die Schlitze am Umfang der Lüfterhaube ist also der Bereich zwischen den Befestigungsschrauben, da dort große Schwingungsamplituden auftreten können. Denn die Befestigungsschrauben stellen schwingungstechnische Knoten dar. Insbesondere dort, wo die Steifigkeit der Lüfterhaube am geringsten ist, treten oft die größten Amplituden auf, wodurch die optimalen Stellen zum Anbringen der Schlitze auffindbar sind. Wichtig ist bei der Erfindung, dass die Schlitze derart angeordnet und ausgeführt sind, dass die Schwingungswellenausbreitung unterbrochen wird. Durch die Schlitze werden die Schwingungsamplituden und somit auch die Schallabstrahlung, also auch Geräuschentwicklung des Antriebs , stark reduziert.

Selbstverständlich strahlen andere Gehäusebereiche, wie Motorgehäuse, Kühlrippen des Motorgehäuses, Anschlusskasten am Motorgehäuse und dergleichen, ebenfalls Schall ab. Auch dort ist das Anbringen von Schlitzen in Bereichen der geringsten Steifigkeit vorteilhaft und emissionsmindernd.

### Bezugszeichenliste

- 1: Schlitz
- 2: Ausnehmung für Befestigungsschrauben
- 3: Lüfterhaube
- 4: Lüfterhaubengitter
- 5: zylindrische Bereich
- 6: abgeschrägter Bereich

## Patentansprüche

1. Lüfterhaube (3) **für einen Elektromotor,**
**dadurch gekennzeichnet, dass**
Schlitze (1) zur Reduzierung der Schallemission am Umfang der Lüfterhaube (3) angeordnet sind,
wobei jeweils ein einziger Schlitz (1) am Umfang der Lüfterhaube (3) in Umfangsrichtung zwischen jeweils zwei Befestigungsschrauben angeordnet ist, welche die Lüfterhaube (3) mit einem Motorgehäuse verbinden, wobei die Befestigungsschrauben an Ausnehmungen (2) der Lüfterhaube (3) vorgesehen sind.

2. Lüfterhaube (3) nach mindestens einem der vorangegangenen Ansprüche,
**dadurch gekennzeichnet, dass**
die Schlitze (1) in axialer Richtung orientiert sind.

3. Lüfterhaube (3) nach mindestens einem der vorangegangenen Ansprüche,
**dadurch gekennzeichnet, dass**
die Lüfterhaube (3) in einem ersten axialen Abschnitt einen zylindrischen Bereich (5), in einem zweiten axialen Bereich einen abgeschrägten Bereich (6) und in einem dritten axialen Bereich ein Lüfterhaubengitter (4) umfasst.

4. Lüfterhaube (3) nach mindestens einem der vorangegangenen Ansprüche,
**dadurch gekennzeichnet, dass**
die Schlitze (1) sich in axialer Richtung nur teilweise über die Breite des zylindrischen Bereiches (5) erstrecken.

5. Lüfterhaube (3) nach mindestens einem der vorangegangenen Ansprüche,
**dadurch gekennzeichnet, dass**
Schlitze (1) in Bereichen (5, 6) der Lüfterhaube (3) mit geringer Steifigkeit oder Festigkeit angeordnet sind.

6. Lüfterhaube (3) nach mindestens einem der vorangegangenen Ansprüche,
**dadurch gekennzeichnet, dass**
Schlitze (1) im zweiten oder dritten axialen Bereich (6) der Lüfterhaube (3) angeordnet sind.

7. Lüfterhaube (3) nach mindestens einem der vorangegangenen Ansprüche,
**dadurch gekennzeichnet, dass**
Anordnung und Ausformung der Schlitze (1) derart ausgeführt sind, dass die Schallemissionen reduziert sind.

8. Lüfterhaube (3) nach mindestens einem der vorangegangenen Ansprüche,
**dadurch gekennzeichnet, dass**
die Lüfterhaube (3) gehäusebildende Funktion für einen Lüfter und/oder einen mit der Motorwelle verbundenen Winkelsensor ausführt.

9. Antrieb, umfassend zumindest einen Elektromotor und ein Getriebe, **dadurch gekennzeichnet, dass**
Schlitze (1) an zumindest einem Gehäuseteil zur Reduzierung der Schallemission angeordnet sind,
wobei jeweils ein einziger Schlitz (1) am Umfang des Gehäuseteils in Umfangsrichtung zwischen jeweils zwei Befestigungsschrauben angeordnet ist, welche das Gehäuseteil mit einem Motorgehäuse verbinden, wobei die Befestigungsschrauben an Ausnehmungen (2) des Gehäuseteils vorgesehen sind.

10. Antrieb nach Anspruch 9,
**dadurch gekennzeichnet, dass**
das vorgenannte Gehäuseteil eine Kühlrippe, ein Anschlusskasten oder eine Lüfterhaube (3) ist.

## Claims

1. Fan cowl (3) for an electric motor,
**characterised in that**
slots (1) for reducing the noise emission are arranged at the periphery of the fan cowl (3),
wherein a single slot (1) in each case is arranged at the periphery of the fan cowl (3) in the peripheral direction between two respective fastening screws which connect the fan cowl (3) to a motor housing, the fastening screws being provided at recesses (2) in the fan cowl (3).

2. Fan cowl (3) according to at least one of the preceding claims,
**characterised in that**
the slots (1) are orientated in an axial direction.

3. Fan cowl (3) according to at least one of the preceding claims,
**characterised in that**
the fan cowl (3) comprises a cylindrical region (5) in a first axial portion, a chamfered region (6) in a second axial region and a fan cowl grille (4) in a third axial region.

4. Fan cowl (3) according to at least one of the preceding claims,
**characterised in that**
the slots (1) extend in an axial direction only partially over the width of the cylindrical region (5).

5. Fan cowl (3) according to at least one of the preceding claims,
**characterised in that**
slots (1) are arranged in regions (5, 6) of the fan cowl (3) with a lower rigidity or strength.

6. Fan cowl (3) according to at least one of the preceding claims,
**characterised in that**
slots (1) are arranged in the second or third axial region (6) of the fan cowl (3).

7. Fan cowl (3) according to at least one of the preceding claims,
**characterised in that**
the arrangement and the shaping of the slots (1) are realised in such a way that the noise emissions are reduced.

8. Fan cowl (3) according to at least one of the preceding claims,
**characterised in that**
the fan cowl (3) realises a housing-forming function for a fan and/or an angle sensor connected to the motor shaft.

9. Drive, comprising at least one electric motor and a gear,
**characterised in that**
slots (1) are arranged on at least one housing part for reducing the sound emission,
wherein a single slot (1) in each case is arranged at the periphery of the housing part in the peripheral direction between two respective fastening screws which connect the housing part to a motor housing, the fastening screws being provided at recesses (2) in the housing part.

10. Drive according to Claim 9,
**characterised in that**
the above-mentioned housing part is a cooling fin, a connection box or a fan cowl (3).

## Revendications

1. Capot de ventilateur (3) pour un moteur électrique, **caractérisé en ce que** des fentes (1) destinées à réduire l'émission de bruit sont disposées sur la périphérie du capot de ventilateur (3),
sachant qu'une seule fente (1) est chaque fois disposée, sur la périphérie du capot de ventilateur (3), en direction périphérique entre deux vis de fixation respectives qui relient le capot de ventilateur (3) à un carter de moteur, sachant que les vis de fixation sont prévues au niveau d'évidements (2) du capot de ventilateur (3).

2. Capot de ventilateur (3) selon la revendication 1, **caractérisé en ce que** les fentes (1) sont orientées en direction axiale.

3. Capot de ventilateur (3) selon au moins une des revendications précédentes, **caractérisé en ce que** le capot de ventilateur (3) comprend une région cylindrique (5) dans une première partie axiale, une région chanfreinée (6) dans une deuxième région axiale, et une grille (4) de capot de ventilateur dans une troisième région axiale.

4. Capot de ventilateur (3) selon au moins une des revendications précédentes, **caractérisé en ce que** les fentes (1) ne s'étendent en direction axiale que partiellement sur la largeur de la région cylindrique (5).

5. Capot de ventilateur (3) selon au moins une des revendications précédentes, caractérisé en qu'on dispose des fentes (1) dans des régions (5,6) du capot de ventilateur (3) de rigidité ou résistance inférieure.

6. Capot de ventilateur (3) selon au moins une des revendications précédentes, **caractérisé en ce qu'**on dispose des fentes (1) dans la deuxième ou troisième région axiale (6) du capot de ventilateur (3).

7. Capot de ventilateur (3) selon au moins une des revendications précédentes, **caractérisé en ce que** la disposition et la conformation des fentes (1) sont réalisées de telle sorte que les émissions de bruit sont réduites.

8. Capot de ventilateur (3) selon au moins une des revendications précédentes, **caractérisé en ce que** le capot de ventilateur (3) joue un rôle de carter pour un ventilateur et/ou pour un capteur d'angle relié à l'arbre du moteur.

9. Entraînement comprenant au moins un moteur électrique et une transmission, **caractérisé en ce que** des fentes (1) sont disposées sur au moins un élément de carter afin de réduire l'émission de bruit,
sachant qu'une seule fente (1) est chaque fois disposée, sur la périphérie de l'élément de carter, en direction périphérique entre deux vis de fixation respectives qui relient l'élément de carter à un carter de moteur, sachant que les vis de fixation sont prévues au niveau d'évidements (2) de l'élément de carter.

10. Entraînement selon la revendication 9, **caractérisé en ce que** l'élément de carter précité est une nervure de refroidissement, un boîtier de connexion ou un capot de ventilateur (3).
